# EUROPÄISCHE PATENTSCHRIFT

(11) **EP 1 263 567 B1**
(45) Veröffentlichungstag und Bekanntmachung des Hinweises auf die Patenterteilung: **05.11.2003**
(21) Anmeldenummer: 01938020.3
(22) Anmeldetag: 13.03.2001
(51) Int. Cl.: B29C 63/02, B29C 63/00, B65C 9/18

(54) **VERFAHREN UND VORRICHTUNG ZUM AUFBRINGEN VON SELBSTKLEBENDEN FOLIENZUSCHNITTEN, INSBESONDERE AUF KFZ-KAROSSERIETEILE**
METHOD AND DEVICE FOR APPLYING SELF-ADHESIVE CUT SECTIONS OF FILM, IN PARTICULAR TO MOTOR VEHICLE BODY PARTS
PROCEDE ET DISPOSITIF PERMETTANT D'APPLIQUER DES DECOUPES DE FILMS AUTO-ADHESIVES, NOTAMMENT SUR DES PIECES DE CARROSSERIE DE VEHICULES

(30) Priorität: 17.03.2000 DE 10013224
(43) Veröffentlichungstag der Anmeldung: 11.12.2002
(73) Patentinhaber: CD-Design GmbH, 42653 Solingen (DE)
(72) Erfinder: TITZE, Michael, 42781 Haan (DE)
(74) Vertreter: Zapf, Christoph, Dipl.-Ing.
(86) Internationale Anmeldenummer: EP0102789
(87) Internationale Veröffentlichungsnummer: WO01068352

(56) Entgegenhaltungen:
- EP-A- 0 049 205
- DE-A- 2 853 033
- US-A- 5 106 439
- US-A- 5 149 392
- US-A- 5 733 410
- US-A- 5 997 670
- PATENT ABSTRACTS OF JAPAN vol. 018, no. 651 (C-1285), 9. Dezember 1994 (1994-12-09) & JP 06 254451 A (HONDA MOTOR CO LTD), 13. September 1994 (1994-09-13)
- "PRESSURE SENSITIVE ADHESIVE LABEL PLACEMENT APPARATUS" IBM TECHNICAL DISCLOSURE BULLETIN,US,IBM CORP. NEW YORK, Bd. 38, Nr. 9, 1. September 1995 (1995-09-01), Seiten 247-249, XP000540253 ISSN: 0018-8689
- PATENT ABSTRACTS OF JAPAN vol. 018, no. 483 (M-1670), 8. September 1994 (1994-09-08) & JP 06 156339 A (HONDA MOTOR CO LTD), 3. Juni 1994 (1994-06-03)

## Beschreibung

Die vorliegende Erfindung betrifft ein Verfahren zum positionsgenauen Aufbringen von auf einer Rückseite selbstklebend beschichteten Folienzuschnitten auf zu beklebende Teile, insbesondere Karosserieteile von Kraftfahrzeugen, nach dem Oberbegriff des Anspruchs 1.

Ferner betrifft die Erfindung gemäß dem Anspruch 10 auch eine neuartige Vorrichtung zum automatischen Aufbringen von selbstklebenden Folienzuschnitten, insbesondere zur Durchführung des erfindungsgemäßen Verfahrens.

Das DE-GM 299 07 231 beschreibt eine selbstklebende Verkleidungsfolie. Solche Folien werden beispielsweise zur Verkleidung von Karosserieteilen in der Kraftfahrzeugindustrie, so oftmals für A-, B- undloder C―Säulen im Außenbereich eines Kraftfahrzeuges, eingesetzt. Sie dienen dort zu einer ästhetisch ansprechenden und schützenden Gestaltung der Bauteiloberfläche. Die Folien werden mit einer an das zu beklebende Bauteil angepaßten, insbesondere länglich streifenartigen Form aus Folienbahnen ausgeschnitten, insbesondere ausgestanzt. Der Folienzuschnitt besteht dabei vornehmlich aus Kunststoff, insbesondere aus PVC. Die Folien müssen dabei sehr exakt positionsgenau und zudem auch faltenfrei aufgebracht werden, was bisher ausschließlich manuell möglich war. Diese Arbeit ist aber sehr zeit- und personalaufwendig und demzufolge mit relativ hohen Produktionskosten verbunden. Außerdem ist die Genauigkeit von der Sorgfalt des jeweiligen Arbeiters abhängig, so daß nur bedingt die erforderliche Wiederholgenauigkeit (Prozeßsicherheit) erreichbar ist.

Die US-A-5 733 410 beschreibt eine Vorrichtung zum Aufkleben von Klebeetiketten (Labels) auf ebenen Oberflächen von bestimmten Artikeln. Diese Vorrichtung weist einen Etikettierkopf mit einer konvex gekrümmten Applikationsfläche auf, auf der das jeweilige Etikett durch Vakuumansaugung fixiert wird. Der Etikettierkopf ist an einem Ende über einen Lagerstift an einem Träger so gelagert, dass sein anderes Endes gegen eine Feder verschwenkbar ist. Der Träger ist zusammen mit dem Etikettierkopf durch einen pneumatischen Zylinder ausschließlich vertikal, senkrecht zur horizontal liegenden, zu beklebenden Artikeloberfläche bewegbar. Dadurch soll das Klebeetikett zunächst durch eine Abwärtsbewegung des Etikettierkopfes einseitig angedrückt und dann durch selbsttätiges, sich nur aus der Vertikalbewegung ergebendes Verschwenken des Etikettierkopfes flächig aufgebracht werden. Allerdings resultiert daraus auch eine reibende Relativbewegung der konvexen Oberfläche des Etikettierkopfes auf der ebenen, zu beklebenden Artikelfläche, so dass sich insbesondere beim Aufbringen von größeren Etiketten ziehharmonikaartige Falten ergeben könnten. Diese bekannte Vorrichtung dürfte daher nur für kleinere Klebeetiketten geeignet sein. Außerdem ergeben sich durch die Vakuumansaugung Einwölbungen des Etiketts derart, dass beim Aufkleben entsprechende Luftblasen eingeschlossen werden. Insgesamt läßt daher bei dieser bekannten Vorrichtung die Akkuratesse zu wünschen übrig. Außerdem ist sie auf eine Anwendung mit horizontal liegenden Klebeflächen beschränkt.

Die DE-A-28 53 033 beschreibt eine Vorrichtung zum Herstellen von Folien-Kraftfahrzeugschildem. Dabei werden Folienabschnitte mittels einer Walze zunächst von einer Doppelfolienbahn übernommen und durch Rotation auf eine Blechplatine aufgewalzt, indem die Platine unter der rotierenden Walze hinwegbewegt wird. Die Folienabschnitte werden auf der Walze durch Unterdruck (Vakuum) fixiert. Somit tritt auch hier der Nachteil auf, dass im Bereich von Ansauglöchern der Walze beim Aufkleben Luftblasen gebildet werden können. Außerdem ist auch hier die Vorrichtung an eine horizontal liegenden Anordnung der zu beklebenden Teile (Bleche) gebunden.

Der vorliegenden Erfindung liegt die Aufgabe zugrunde, ein Verfahren anzugeben, mit dem ein positionsgenaues Aufkleben von Folienzuschnitten wirtschaftlicher, insbesondere mit geringerem Personal- und Zeitaufwand, aber mit dennoch hoher Akkuratesse (exakte Positionierung, Faltenfreiheit) und insbesondere unabhängig von der räumlichen Orientierung des zu beklebenden Teils durchführbar ist. Ferner soll auch eine konstruktiv einfache und preiswerte Vorrichtung mit hoher Prozeßsicherheit zur Durchführung des Verfahrens geschaffen werden.

Erfindungsgemäß wird dies zunächst mit einem Verfahren nach dem Anspruch 1 erreicht. Demnach wird der jeweilige Folienzuschnitt mit seiner der selbstklebenden Rückseite gegenüberliegenden Vorderseite in einer definierten Ausrichtung auf einer konvex gekrümmten Aufnahmefläche einer Applikationseinrichtung vorpositioniert und anschließend durch eine räumlich definiert zwangsgesteuerte Andruck- und Abwälzbewegung von der Aufnahmefläche der Applikationseinrichtung auf das jeweilige zu beklebende, relativ zu der Applikationseinrichtung in definierter Anordnung fixierte Teil aufgebracht. Dazu wird die Applikationseinrichtung erfindungsgemäß dreidimensional (in drei Raumkoordinaten) zwangsgesteuert derart bewegt, dass eine reine, reibungsfreie Abwälzbewegung auf der zu beklebenden Fläche bzw. über die Fläche hinweg erreicht wird. Dabei handelt es sich nicht um eine einfache Schwenkbewegung der Applikationseinrichtung um nur eine bestimmte Schwenkachse bei gleichzeitiger geradliniger Vorschub-/Andruckbewegung, sondern vielmehr um eine spezielle dreidimensional gesteuerte Bewegung jeweils um eine "virtuelle", sich dynamisch verlagernde Schwenkbewegungsachse, die stets im etwa tangentialen Berührungspunkt (Berührungslinie) zwischen dem Bauteil und der konvexen Aufnahmefläche (bzw. dem darauf angeordneten Folienabschnitt) liegt und daher mit fortschreitender Abwälzbewegung über das Bauteil hinweg wandert. Auf diese Weise wird vorteilhafterweise eine reibende Relativbewegung zwischen dem Bauteil und der konvexen Aufnahmefläche in der bzw. auf der zu beklebenden Fläche vollständig vermieden, was eine glatte, faltenfreie Verklebung des Folienzuschnittes gewährleistet. Die erfindungsgemäße Bewegung der Applikationseinrichtung bzw. der Aufnahmefläche mit dem darauf exakt vorpositionierten Folienzuschnitt gleicht somit einer wippenartigen Abwälzbewegung eines früher gebräuchlichen Tinten-Wiegelöschers. Damit ist es vorteilhafterweise möglich, den Folienzuschnitt in einem automatisierten Verfahren sehr exakt und faltenfrei aufzubringen. Dazu wird zweckmäßigerweise ein numerisch gesteuerter Roboter eingesetzt, so daß das Aufbringen durch eine sehr exakte Bewegungssteuerung mit hoher Wiederholgenauigkeit (Prozeßsicherheit) durchführbar ist. Zudem ist durch die Erfindung auch die räumliche Orientierung der zu beklebenden Fläche völlig beliebig. Dies bedeutet, dass die Fläche nicht horizontal zu liegen braucht, sondern beispielsweise auch etwa vertikal oder beliebig anders im Raum orientiert sein kann. Dies stellt einen besonderen Vorteil im Hinblick auf die bevorzugte Anwendung der Erfindung in der Fahrzeugindustrie dar, weil beliebige Karosserieflächen direkt am Montageband mit Dekorfolien versehen werden können. Zudem wird durch die frei steuerbare Bewegung auch eine Anpassung an bestimmte Flächenkonturen des Bauteils möglich (Konturunabhängigkeit).

Vorzugsweise erfolgt die gesteuerte Applikationsbewegung allein durch Bewegung der Applikationseinrichtung relativ zu dem ortsfest fixierten Bauteil. Grundsätzlich ist aber auch eine "kinematische Umkehr" oder auch eine Kombination von Bewegungen beider Teile (Bauteil und Applikationseinrichtung) möglich.

Eine erfindungsgemäße Vorrichtung zeichnet sich durch die Merkmale des Anspruchs 10 aus. Vorteilhafte Weiterbildungen der Erfindung sind in den von den Ansprüchen 1 bzw. 10 jeweils abhängigen Ansprüchen enthalten.

Anhand der Zeichnung soll die Erfindung beispielhaft genauer erläutert werden, wobei ein bevorzugtes Ausführungsbeispiel einer erfindungsgemäßen Vorrichtung in unterschiedlichen Zuständen während der Durchführung des erfindungsgemäßen Verfahrens dargestellt ist. Im Einzelnen zeigen:
- Fig. 1: eine perspektivische Seitenansicht einer erfindungsgemäßen Vorrichtung mit einer robotergesteuerten Applikationseinrichtung,
- Fig. 2: eine Draufsicht auf eine beispielhaft im Bereich einer B-Säule zu beklebende Fahrzeugtür in Pfeilrichtung II gemäß Fig. 1,
- Fig. 3: einen Schnitt durch die Tür in der Ebene III-III gemäß Fig. 2,
- Fig. 4: eine Draufsicht auf die Aufnahmefläche der Applikationseinrichtung zusammen mit einem noch separat dargestellten Folienzuschnitt,
- Fig. 5: eine Ansicht wie in Fig. 4 mit dem auf der Aufnahmefläche vorpositionierten Folienzuschnitt während des Entfernens eines Positionierungsabschnittes sowie einer auf der selbstklebenden Rückseite angeordneten Schutzschicht (Abdeckfolie/Silikonpapier oder dergleichen),
- Fig. 6: eine Teilansicht analog zu Fig. 1 während des Beginns des eigentlichen Applikationsvorgangs,
- Fig. 7: eine Ansicht wie in Fig. 6 während der erfindungsgemäßen Abwälz-bzw. Wiegebewegung der Applikationseinrichtung,
- Fig. 8: ein optional durchzuführendes Anrollen mittels einer zusätzlichen Andruckrolle der Applikationseinrichtung,
- Fig. 9: einen Schnitt IX-IX gemäß Fig. 8 zur Veranschaulichung des Vorgangs beim Umlegen eines Seitenstreifens (sogenannter Umbug) des Folienzuschnitts,
- Fig. 10: eine Ansicht ähnlich Fig. 9 zum Umlegen des Seitenstreifens um ca. 180° und
- Fig. 11: eine Draufsicht wie in Fig. 2 auf die fertig beklebte Tür.

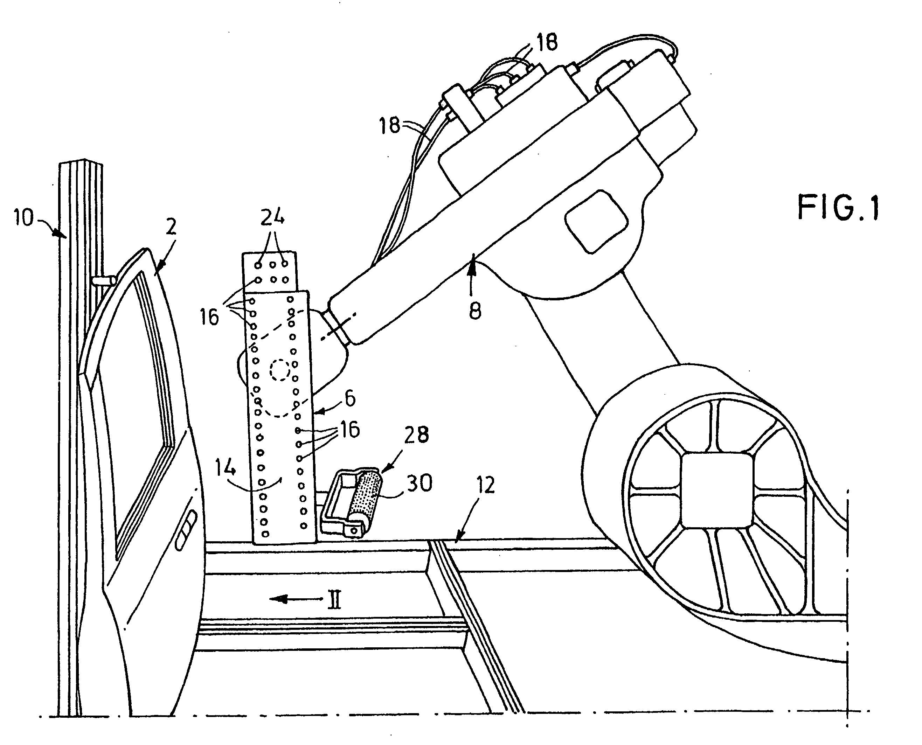

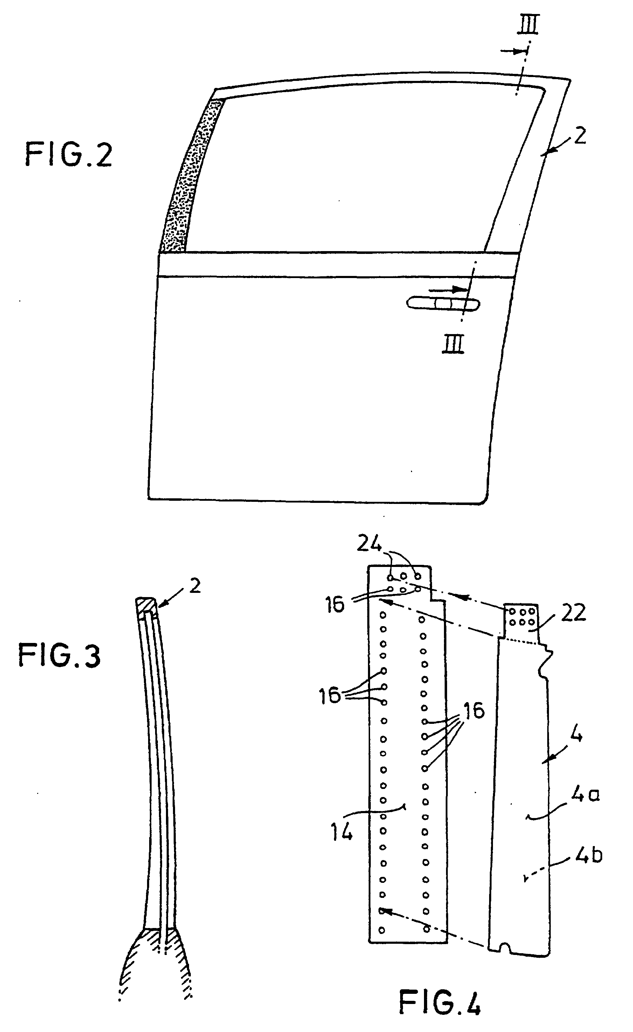

Gemäß Fig. 1 soll ein Teil 2 - hier beispielhaft eine Fahrzeugtür im Bereich eines Holmes (z. B. B-Säule) - mit einem Folienzuschnitt 4 (vgl. insbesondere Fig. 4) beklebt werden. Der Folienzuschnitt 4 ist dazu auf einer Rückseite 4a selbstklebend, d. h. mit einem druckempfindlichen Haftkleber, beschichtet, während seine gegenüberliegende Vorderseite 4b eine Dekorfläche bildet.

Wie sich weiterhin aus Fig. 1 ergibt, weist eine erfindungsgemäße Vorrichtung zum automatischen, positionsgenauen Aufbringen des Folienzuschnittes 4 auf das Teil 2 eine Applikationseinrichtung 6 auf, die vorzugsweise bezüglich ihrer Bewegungen exakt dreidimensional im Raum gesteuert von einem Roboterarm 8 geführt wird. Die Applikationseinrichtung 6 bildet somit praktisch eine "Hand" des Roboterarms 8. Das zu beklebende Teil 2 ist relativ zu der Applikationseinrichtung 6 in einer definierten Ausrichtung fixierbar, wozu entsprechende Haltemittel 10 in einer definierten Anordnung relativ zu dem Roboterarm 8 angeordnet, beispielsweise an einem gemeinsamen Maschinengestell 12 befestigt sind.

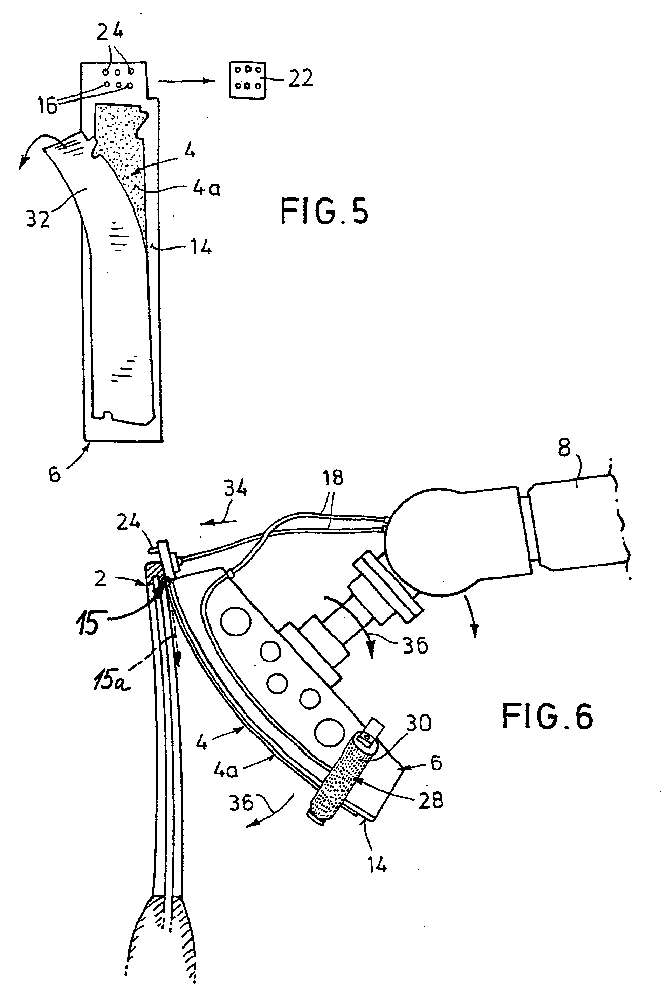

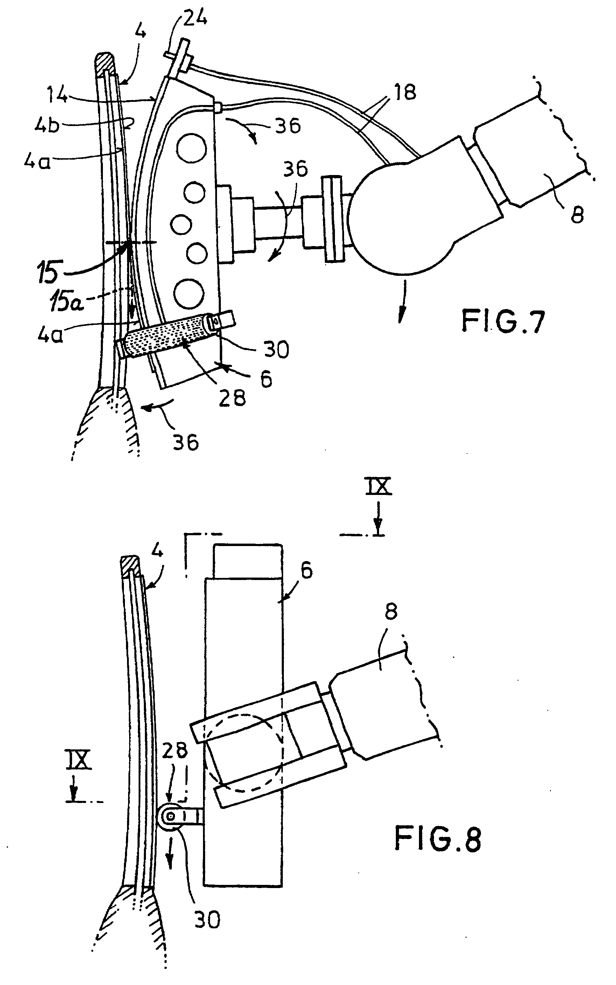

Die Applikationseinrichtung 6 weist eine konvex gekrümmte Aufnahmefläche 14 zur definiert ausgerichteten und fixierten Aufnahme des jeweiligen Folienzuschnittes 4 auf. Die Aufnahmefläche 14 ist bezüglich ihrer Flächenform an die Flächenform des Folienzuschnittes 4 angepaßt. Im dargestellten Beispiel ist der Folienzuschnitt 4 länglich und im weitesten Sinne langgestreckt rechteckig ausgebildet, so daß die Aufnahmefläche 14 ebenfalls eine entsprechende, aber etwas größere länglich rechteckige Flächenform aufweist. Indem die Aufnahmefläche 14 nur in Richtung einer, und zwar insbesondere der längslaufenden Flächenachse gekrümmt, senkrecht dazu (also in Querrichtung) aber geradlinig ausgebildet ist, ergibt sich eine Wälz- bzw. Wiegefläche nach Art eines früher als Tintenlöscher gebräuchlichen Wiegelöschers. Der jeweilige Folienzuschnitt 4 ist auf der Aufnahmefläche 14 insbesondere durch Vakuumansaugung fixierbar und zwar in einer Ausrichtung, in der er mit seiner Dekor-Vorderseite 4b auf der Aufnahmefläche 14 liegt und seine selbstklebend beschichtete Rückseite 4a frei nach vorne von der Aufnahmefläche 14 weg weist. Erfindungsgemäß ist die Applikationseinrichtung 6 relativ zu dem beklebenden Teil 2 derart dreidimensional definiert zwangsgesteuert bewegbar, daß der Folienzuschnitt 4 durch eine reine, d. h. reibungsfreie Andruck- und Abwälzbewegung von der Aufnahmefläche 14 auf das Teil 2 aufbringbar ist. Dieser Vorgang ist insbesondere in den Fig. 6 und 7 veranschaulicht. Demnach erfolgt die Abwälzbewegung nicht um nur eine bestimmte Schwenkachse der Applikationseinrichtung 6, sondern jeweils um eine "virtuelle", sich dynamisch verlagernde, mit der Abwälzbewegung über das Bauteil 2 wandernde Schwenkbewegungsachse 15 (vgl. Fig. 6 und 7), die während der Abwälzbewegung stets mit einer im Wesentlichen linienförmigen, sich zwischen dem Bauteil 2 und dem auf der konvexen Aufnahmefläche 14 angeordneten Folienzuschnitt 4 ergebenden Berührungszone zusammenfällt. In dieser Berührungszone liegen das Bauteil 2 und die Aufnahmefläche 14 unter Zwischenlage des Folienzuschnittes 4 etwa tangential aneinander. Durch diese erfindungsgemäße Bewegungssteuerung der Applikationseinrichtung 6 werden vorteilhafterweise jegliche Relativbewegungen und daraus resultierende Reibungen auf der zu beklebenden Fläche vermieden, weil die Applikationseinrichtung lediglich auf dem Teil 2 abwälzt (abrollt). Dadurch wird der Folienzuschnitt 4 sehr akkurat und völlig faltenfrei aufgebracht.

Zur Bewegungssteuerung des Roboterarms 8 und der Applikationseinrichtung 6 ist eine in der Zeichnung nicht veranschaulichte programmierbare Steuereinheit vorgesehen. Es kann sich um eine übliche CNC-Steuerung handeln.

Die bereits erwähnten Mittel zur Vakuumansaugung bestehen aus Vakuum-Saugöffnungen 16 im Bereich der Aufnahmefläche 14, wobei die Saugöffnungen 16 beispielsweise über Leitungen 18 mit einer nicht dargestellten Vakuumpumpe verbunden sind. Die Saugöffnungen sind zudem in einer bestimmten Verteilung über die Aufnahmefläche 14 hinweg angeordnet. Besonders vorteilhaft ist es, wenn die Saugöffnungen 16 nur im Bereich von Randstreifen 20 des Folienzuschnittes 4 angeordnet sind, wobei diese Randstreifen 20 nach dem ersten Aufbringen auf das Teil 2 mittels der erfindungsgemäßen Andruck- und Wälzbewegung der Applikationseinrichtung 6 das Teil 2 noch randlich überragen, d. h. außerhalb der zuerst beklebten Fläche liegen. Dadurch, daß die Vakuumansaugung nur im Bereich der Randstreifen 20 erfolgt, werden vorteilhafterweise Einwölbungen der Folie im zuerst aufgeklebten Flächenbereich vermieden, die ansonsten zu Blasenbildungen führen könnten. Es wird somit eine hohe Akkuratesse erreicht. Weitere Saugöffnungen 16 liegen zudem im Bereich eines an einer Schmalseite angeordneten Positionierungsabschnittes 22 des Folienzuschnittes 4, wobei dieser Positionierungsabschnitt 22 nach dem genau positionierten Fixieren des Folienzuschnittes 4 entfernbar ist (vgl. Fig. 5). In diesem Bereich sind zudem - insbesondere stiftförmige -Ausrichtmittel 24 auf der Aufnahmefläche 14 angeordnet, auf die zur Vorausrichtung der Folienzuschnitt 4 mit dem Positionierungsabschnitt 22 aufhängbar ist.

Die Aufnahmefläche 14 der Applikationseinrichtung 6 ist vorteilhafterweise von einer weichelastisch verformbaren Schicht 26 gebildet, insbesondere von einem Silikonkissen oder aus einem anderen geeigneten Kunststoff. Auch dies trägt zu einer qualitativ hochwertigen Verklebung bei.

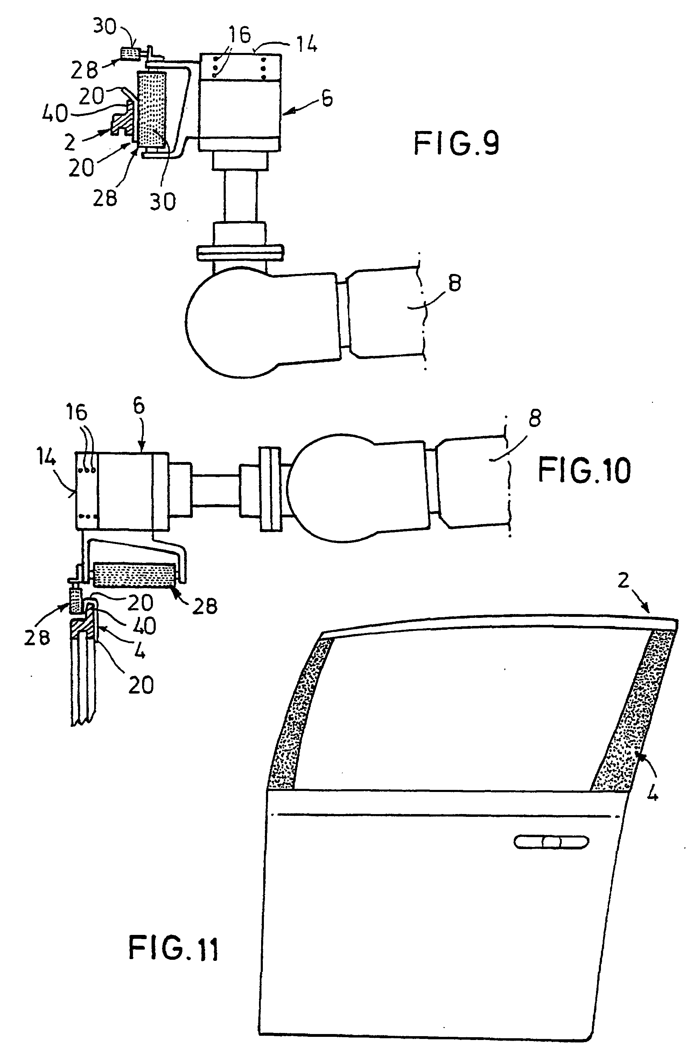

Die Applikationseinrichtung 6 kann zusätzlich mindestens eine frei drehbar gelagerte Andruckrolle 28 - vorzugsweise ebenfalls mit einem weichelastisch verformbaren Belag 30 - aufweisen. Im dargestellten Ausführungsbeispiel sind an der Applikationseinrichtung 6 zwei unterschiedlich lange bzw. breite Andruckrollen 28 befestigt ; sie können durch entsprechend gesteuerte Bewegungen der Applikationseinrichtung 6 jeweils in eine Gebrauchsposition gebracht und zum Andrücken des Folienzuschnittes 4 über diesen hinweg geführt werden. Die Maße (Durchmesser, Länge bzw. Breite ) der jeweiligen Andruckrolle 28 sind dabei an die jeweilige Verwendung angepaßt. Im dargestellten Beispiel sind eine breitere Andruckrolle 28 zum Anrollen der gesamten Breite des Folienzuschnittes 4 sowie eine schmalere Andruckrolle 28 für zusätzliche Verwendungen vorgesehen. Hierzu wird insbesondere auf Fig. 9 und 10 hingewiesen.

Im Folgenden soll das erfindungsgemäße Verfahren beispielhaft genauer erläutert werden.

Zunächst wird der jeweilige Folienzuschnitt 4 gemäß Fig. 4 und 5 mit seiner der selbstklebenden Rückseite 4a gegenüberliegenden Vorderseite 4b in einer definierten Ausrichtung auf der konvex gekrümmten Aufnahmefläche 14 der Applikationseinrichtung 6 vorpositioniert. Dazu kann der Folienzuschnitt 4 mit Positionsöffnungen seines Positionierungsabschnittes 22 auf die Ausrichtmittel 14 gehängt werden. Dies kann mit Vorteil durch eine definiert gesteuerte Abholbewegung der Applikationseinrichtung 6 erfolgen, wodurch diese jeweils einen Folienzuschnitt 4 beispielsweise aus einer magazinartigen Zuführstation übernimmt. Dieses Aufhängen bzw. Vorpositionieren des Folienzuschnittes 4 kann allerdings auch manuell durch eine Hilfsperson erfolgen. In diesem zunächst lose aufgehängten Zustand kann zur noch genaueren Ausrichtung der Folienzuschnitt 4 ausgehend von den Ausrichtmitteln 24 mittels der breiteren Andruckrolle 28 längs über die Aufnahmefläche 14 hinweg überrollt werden. Es erfolgt dann die eigentliche Fixierung insbesondere durch Aktivierung der Vakuumansaugung über die bevorzugt randlich angeordneten Saugöffnungen 16.

Gemäß Fig. 5 wird dann der Positionierungsabschnitt 22 von dem eigentlichen Folienzuschnitt 4 abgetrennt und entfernt. Außerdem wird eine zuvor auf der Selbstklebebeschichtung angeordnete Schutzschicht 32 abgezogen und entfernt und somit die Klebebeschichtung freigelegt. Beide Vorgänge können gemeinsam in einem Arbeitsgang beispielsweise manuell durchgeführt werden.

Gemäß Fig. 6 wird dann zum ersten, einseitigen (schmalrandseitigen) Andrücken des Folienzuschnittes 4 die Applikationseinrichtung 6 in Pfeilrichtung 34 gegen das Teil 2 bewegt und leicht angedrückt. Es schließt sich die erfindungsgemäße gesteuerte Wiegebewegung um die sich dabei dynamisch in Richtung der in Fig. 6 und 7 gestrichelt eingezeichneten Pfeile 15a verlagernde Schwenksbewegungsachse 15 entsprechend den eingezeichneten Pfeile 36 an, so daß der Folienzuschnitt 4 durch eine echte Abwälzbewegung faltenfrei aufgeklebt wird. Während dieser Wälzbewegung, d. h. vorzugsweise schon nach dem ersten Klebekontakt gemäß Fig. 6, wird die Vakuumansaugung deaktiviert. Dies kann auch sukzessive während der Wälzbewegung über die Fläche hinweg erfolgen. Gemäß Fig. 8 kann ein zusätzliches, zumindest bereichsweises Überrollen mittels der Andruckrolle 28 durchgeführt werden.

Bei dem speziellen Anwendungsfall der Beschichtung im Bereich einer Kfz-Säule wird oftmals gefordert, daß die Folie auch um wenigstens einen stegartigen Randabschnitt 40 des Kfz-Teils 2 herumgelegt wird (sogenannter Umbug). In diesem Fall wird gemäß Fig. 9 und 10 der entsprechend überstehende Randstreifen 20 des Folienzuschnittes 4 erfindungsgemäß durch ein zumindest einmaliges Überrollen mittels einer definiert gesteuerten Bewegung der Andruckrolle 28 über den Randabschnitt 40 hinweg herumgelegt. Um ein Herumlegen um etwa 180° zu erreichen, ist ein zumindest zweimaliges Überrollen zweckmäßig. Das Umlegen wird durch die relativ weichelastische Verformbarkeit des Belags 30 der Andruckrolle 28 begünstigt. Dadurch kann auch in diesem Bereich eine faltenfreie Verklebung erreicht werden.

Die Erfindung ist nicht auf die dargestellten und beschriebenen Ausführungsbeispiele beschränkt, sondern umfaßt auch alle im Sinne der Erfindung gleichwirkenden Ausführungen. Beispielsweise gibt es zu der beschriebenen Vorausrichtung des Folienzuschnittes 4 auf der Aufnahmefläche 14 die vorteilhafte Alternative, auf der Aufnahmefläche 14 Ausrichtmittel in Form von wenigstens punktförmigen Erhebungen zur randlichen Anlage des Folienzuschnittes 4 derart zu bilden, daß der Folienzuschnitt zumindest durch eine Dreipunktanlage definiert auf der Aufnahmefläche 14 positionierbar ist. Dadurch können sich der oben beschriebene Positionierungsabschnitt 22 und die diesem zugeordneten Ausrichtmittel 24 erübrigen. Außerdem entfällt auch der Arbeitsgang des z.B. manuellen Abtrennens und Entfernes des Positionierungsabschnittes 22. Es braucht nur der eigentliche, aufzuklebende Folienabschnitt 4 aufgelegt und an die erhöhten Ausrichtmittel zur Anlage gebracht zu werden. Dies wird bevorzugt manuell durchgeführt, was auch für das nach der Vakuumfixierung folgende Entfernen der Schutzschicht 32 gilt. Die auf der Aufnahmefläche 14 als relativ flache bzw. niedrige Erhebungen angeordneten Ausrichtmittel können durch die Elastizität bzw. Flexibilität der elastischen Schicht 26 beim Andrücken der Folie 4 ausweichen, so daß sie das Andrücken nicht beeinträchtigen. Es ist weiterhin möglich, den Folienabschnitt 4 mit einer beliebigen Stelle seiner Gesamtfläche zuerst anzudrücken, d. h. die Anfangsstelle der Positionierung (oben, unten, mittig...) am zu beklebenden Teil ist durch die frei programmierbare Bewegungssteuerung frei wählbar. Im Übrigen ist die Erfindung auch ohnehin nicht auf die im Anspruch 1 bzw. 10 definierte Merkmalskombination beschränkt, sondern kann auch durch jede beliebige andere Kombination von bestimmten Merkmalen aller insgesamt offenbarten Einzelmerkmalen definiert sein. Dies bedeutet, daß grundsätzlich praktisch jedes Einzelmerkmal des Anspruchs 1 bzw. 10 weggelassen bzw. durch mindestens ein an anderer Stelle der Anmeldung offenbartes Einzelmerkmal ersetzt werden kann. Insofern sind die Ansprüche lediglich als ein erster Formulierungsversuch für eine Erfindung zu verstehen.

## Patentansprüche

1. Verfahren zum Aufbringen von auf einer Rückseite (4a) selbstklebend beschichteten Folienzuschnitten (4) auf zu beklebende Teile (2), insbesondere Karosserieteile von Kraftfahrzeugen, wobei der jeweilige Folienzuschnitt (4) in einem konvex gekrümmten Zustand seiner selbstklebenden Rückseite in einer definierten Ausrichtung vorpositioniert und dann aufgebracht wird,
**dadurch gekennzeichnet,**
**dass** der vorpositionierte Folienzuschnitt (4) durch eine derart dreidimensional definiert zwangsgesteuerte Applikationsbewegung auf das jeweilige zu beklebende Teil (2) aufgebracht wird, dass dabei eine reibungsfreie Andruck- und Abwälzbewegung jeweils um eine, mit der Abwälzbewegung über die Oberfläche des Bauteils (2) wandernde Schwenkbewegungsachse (15) erfolgt.

2. Verfahren nach Anspruch 1,
**dadurch gekennzeichnet,**
**dass** der jeweilige Folienzuschnitt (4) in der definierten Ausrichtung auf einer konvex gekrümmten Aufnahmefläche (14) einer Applikationseinrichtung (6) insbesondere durch Vakuumansaugung fixiert und insbesondere zuvor von der Applikationseinrichtung (6) durch eine definiert gesteuerte Abholbewegung aus einer Zuführstation übernommen wird.

3. Verfahren nach Anspruch 2,
**dadurch gekennzeichnet,**
**dass** die Schwenkbewegungsachse (15) während der Abwälzbewegung stets mit einer im Wesentlichen linienförmigen, sich zwischen dem Bauteil (2) und der konvexen, den Folienzuschnitt (4) tragenden Aufnahmefläche (14) ergebenden Berührungszone zusammenfällt.

4. Verfahren nach Anspruch 2 oder 3,
**dadurch gekennzeichnet,**
**dass** während der Applikationsbewegung die Applikationseinrichtung (6) relativ zu dem zu beklebenden, in einer definierten Anordnung ortsfest fixierten Teil (2) bewegt wird.

5. Verfahren nach einem der Ansprüche 1 bis 4,
**dadurch gekennzeichnet,**
**dass** der Folienzuschnitt (4) durch insbesondere stiftförmige Ausrichtmittel (24) der Applikationseinrichtung (6) positioniert und dann fixiert wird.

6. Verfahren nach einem der Ansprüche 1 bis 5,
**dadurch gekennzeichnet,**
**dass** vor dem Aufbringen von dem Folienzuschnitt (4) eine zuvor auf der selbstklebend beschichteten Rückseite (4a) angeordnete Schutzschicht (32) entfernt wird.

7. Verfahren nach einem der Ansprüche 1 bis 6,
**dadurch gekennzeichnet,**
**dass** nach dem Aufbringen wenigstens ein überstehender Randstreifen (20) des Folienzuschnittes (4) um einen stegartigen Randabschnitt (40) des zu beklebenden Teils (2) herumgelegt wird, und zwar insbesondere durch ein zumindest einmaliges Überrollen mittels einer dreidimensional definiert gesteuerten Bewegung einer Andruckrolle (28) über den Randabschnitt (40) hinweg.

8. Verfahren nach Anspruch 7,
**dadurch gekennzeichnet,**
**dass** der Randstreifen (20) durch ein zumindest zweimaliges Überrollen um etwa 180° um den Randabschnitt (40) herumgelegt wird.

9. Verfahren nach Anspruch 7 oder 8 und einem der Ansprüche 2 bis 6,
**dadurch gekennzeichnet,**
**dass** der Folienzuschnitt (4) auf der Aufnahmefläche (14) der Applikationseinrichtung (6) nur im Bereich des wenigstens einen Randstreifens (20), insbesondere im Bereich von mindestens zwei gegenüberliegenden Randstreifen (20), durch Vakuumansaugung fixiert wird.

10. Vorrichtung zum Aufbringen von einseitig selbstklebend beschichteten Folienzuschnitten (4) auf zu beklebende Teile (2), zur Durchführung des Verfahrens nach einem der vorhergehenden Ansprüche, bestehend aus einer Applikationseinrichtung (6) mit einer konvex gekrümmten Aufnahmefläche (14) zur definiert ausgerichteten und fixierten Aufnahme des jeweiligen Folienzuschnittes (4),
**dadurch gekennzeichnet,**
**dass** die Applikationseinrichtung (6) relativ zu dem zu beklebenden Teil (2) derart dreidimensional definiert zwangsgesteuert bewegbar ist, daß der Folienzuschnitt (4) durch eine reine, reibungsfreie Andruck- und Abwälzbewegung von der Aufnahmefläche (14) auf das relativ zu der Applikationseinrichtung (6) in definierter Anordnung fixierte Teil (2) aufbringbar ist.

11. Vorrichtung nach Anspruch 10,
**dadurch gekennzeichnet,**
**dass** die Applikationseinrichtung (6) derart dreidimensional zwangsgesteuert bewegbar ist, dass die Abwälzbewegung jeweils um eine, mit der Abwälzbewegung über das Bauteil (2) wandernde Schwenkbewegungsachse (15) erfolgt, die stets mit einer im Wesentlichen linienförmigen, sich zwischen dem Bauteil (2) und der konvexen, den Folienzuschnitt (4) tragenden Aufnahmefläche (14) ergebenden Berührungszone zusammenfällt.

12. Vorrichtung nach Anspruch 10 oder 11,
**dadurch gekennzeichnet,**
**dass** die Applikationseinrichtung (6) Bestandteil eines Roboterarms (8) ist, zu dessen Bewegungssteuerung eine programmierbare Steuereinheit vorgesehen ist.

13. Vorrichtung nach einem der Ansprüche 10 bis 12,
**dadurch gekennzeichnet,**
**daß** die Applikationseinrichtung (6) zum Fixieren des Folienzuschnittes (4) Mittel zur Vakuumansaugung aufweist.

14. Vorrichtung nach Anspruch 13,
**dadurch gekennzeichnet,**
**dass** die Applikationseinrichtung (6) im Bereich der Aufnahmefläche (14) Vakuumsaugöffnungen (16) aufweist, wobei die Saugöffnungen (16) insbesondere im Bereich von Randstreifen (20) des Folienzuschnittes (4) angeordnet sind.

15. Vorrichtung nach einem der Ansprüche 10 bis 14,
**dadurch gekennzeichnet,**
**dass** die Aufnahmefläche (16) der Applikationseinrichtung (6) von einer weichelastisch verformbaren Schicht (26) gebildet ist.

16. Vorrichtung nach einem der Ansprüche 10 bis 15,
**dadurch gekennzeichnet,**
**dass** die Applikationseinrichtung (6) mindestens eine drehbar gelagerte Andruckrolle (28) mit einem insbesondere weichelastisch verformbaren Belag aufweist.

17. Vorrichtung nach einem der Ansprüche 10 bis 16,
**gekennzeichnet durch** Ausrichtmittel zum lagegenauen, definierten Vorausrichten des Folienzuschnittes (4) auf der Aufnahmefläche (14).

## Claims

1. Process for the application of precut plastic films (4) coated adhesively on the reverse (4a) onto parts (2) to be covered, in particular car body parts, whereby the respective precut plastic film (4) with its self-adhesive reverse in a convex curve is prepositioned in a defined alignment and then applied,
**characterized in that**
the prepositioned precut plastic film (4) is applied to the respective part (2) to be covered by a three-dimensionally defined, positively controlled application movement so that there is a frictionless pressure and roll-off movement each time around a rotating movement axis moving with the roll-off movement over the surface of the component (2).

2. Process according to Claim 1,
**characterized in that**
the respective precut plastic film (4) is fixed in the defined alignment on a convex holding surface (14) of an applicator (6) in particular by vacuum suction and in particular beforehand taken by the applicator (6) from a feed station by means of a precisely controlled collection movement.

3. Process according to Claim 2,
**characterized in that**
the rotating movement axis (15) during the roll-off movement always coincides with an essentially linear contact zone resulting between the component (2) and the convex holding surface (14) with the precut plastic film (4).

4. Process according to Claim 2 or 3,
**characterized in that**
during the application movement the applicator (6) is moved relative to the part (2) to be covered, fixed and stationary in a defined arrangement.

5. Process according to one of Claims 1 to 4,
**characterized in that**
the precut plastic film (4) is positioned and then fixed by in particular pin-shaped means of alignment (24) of the applicator (6).

6. Process according to one of Claims 1 to 5,
**characterized in that**
before application of the precut plastic film (4) a protective layer (32) previously arranged on the self-adhesive coated reverse (4a) is removed.

7. Process according to one of Claims 1 to 6,
**characterized in that**
after application at least one projecting edge strip (20) of the precut plastic film (4) is wrapped around a web-type edge section (40) of the part (2) to be covered, and in particular by an at least single pass by a three-dimensionally defined and controlled movement of the pressure roller (28) over the edge section (40).

8. Process according to Claim 7,
**characterized in that**
the edge strip (20) is wrapped around by rolling at least twice by around 180° around the edge section (40).

9. Process as in Claim 7 or 8 and one of Claims 2 to 6,
**characterized in that**
the precut plastic film (4) of the holding surface (14) of the applicator (6) is fixed by vacuum suction only in the area of at least one edge strip (20), in particular in the area of at least two opposite edge strips (20).

10. Device for application of precut plastic films (4) coated adhesively on one side to parts (2) to be covered, for performing the process according to one of the previous claims, consisting of an applicator (6) with a convex holding surface (14) for precisely aligned and fixed holding of the respective precut plastic film (4),
**characterized in that**
the applicator (6) can be moved three-dimensionally with precise positive control so that the precut plastic film (4) can be applied by a clean, frictionless pressing and roll-off movement of the holding surface (14) to the part (2) fixed in defined arrangement relative to the applicator (6).

11. Device according to Claim 10,
**characterized in that**
the applicator (6) can be moved three-dimensionally with positive control so that the roll-off movement each time takes place around a rotating movement axis (15) moving over the component (2) with the roll-off movement, that always coincides with an essentially linear contact zone resulting between the component (2) and the convex holding surface (14) with the precut plastic film (4).

12. Device according to Claim 10 or 11,
**characterized in that**
the applicator (6) is part of a rotor arm (8), for the movement control of which a programmable control unit is provided.

13. Device according to one of Claims 10 to 12,
**characterized in that**
the applicator (6) has means for vacuum suction for fixing the precut plastic film (4).

14. Device according to Claim 13,
**characterized in that**
the applicator (6) has vacuum openings (16) in the area of the holding surface (14), the suction openings (16) being arranged in particular in the area of edge strips (20) of the precut plastic film (4).

15. Device as in one of Claims 10 to 14,
**characterized in that**
the holding surface (16) of the applicator (6) is formed of a flexibly deformable layer (26).

16. Device according to one of Claims 10 to 15,
**characterized in that**
the applicator (6) has at least one pivoted pressure roller (28) with an in particular flexibly deformable cover.

17. Device according to one of Claims 10 to 16,
**characterized by** means of alignment for positionally accurate, defined alignment of the precut plastic film (4) on the holding surface (14).

## Revendications

1. Procédé pour appliquer des pièces de feuille découpées (4) enduites sur une face arrière (4a) de façon à être autoadhésives sur des éléments à coller (2), en particulier des éléments de carrosserie de véhicules automobiles, dans lequel la pièce de feuille découpée (4) concernée est pré-positionnée avec sa face arrière autoadhésive dans un état incurvé avec une forme convexe dans une orientation définie, et ensuite appliquée,
**caractérisé en ce que** la pièce de feuille découpée (4) pré-positionnée est appliquée sur l'élément à coller (2) concerné par un mouvement d'application commandé positivement, défini dans les trois dimensions de manière que, dans cette action, un mouvement de pression et de déroulement sans frottement se produise autour d'un axe de mouvement de pivotement (15) qui se déplace sur la surface de l'élément (2) avec le mouvement de déroulement.

2. Procédé selon la revendication 1,
**caractérisé en ce que** la pièce de feuille découpée (4) concernée est immobilisée dans l'orientation définie sur une surface réceptrice (14) incurvée avec une forme convexe d'un dispositif d'application (6), en particulier par aspiration par le vide, et, en particulier, elle est prise antérieurement par le dispositif d'application (6) sur une station d'amenée par un mouvement de soulèvement commandé de façon définie.

3. Procédé selon la revendication 2,
**caractérisé en ce que**, pendant le mouvement de déroulement, l'axe du mouvement de pivotement (15) coïncide en permanence avec une zone de contact sensiblement linéaire qui se forme entre l'élément (2) et la surface réceptrice convexe (14) qui porte la pièce de feuille découpée (4).

4. Procédé selon la revendication 2 ou 3,
**caractérisé en ce que**, pendant le mouvement d'application, le dispositif d'application (6) est déplacé par rapport à l'élément (2) qu'il s'agit d'encoller, et qui est immobilisé de façon fixe dans une disposition définie.

5. Procédé selon une des revendications 1 à 4,
**caractérisé en ce que** la pièce de feuille découpée (4) est positionnée puis immobilisée par des moyens d'orientation (24), en particulier en forme de chevilles, du dispositif d'application (6).

6. Procédé selon une des revendications 1 à 5,
**caractérisé en ce qu'**avant l'application de la pièce de feuille découpée (4), une couche protectrice (32) disposée antérieurement sur la face arrière (4a) revêtue de façon à être autoadhésive est enlevée.

7. Procédé selon une des revendications 1 à 6,
**caractérisé en ce qu'**après l'application, au moins une bande latérale débordante (20) de la pièce de feuille découpée (4) est rabattue autour d'un segment de bord (40) en forme de nervure de l'élément à encoller (2), et ceci en particulier par un rabattement au moins à une reprise au moyen d'un mouvement d'un rouleau presseur (28) commandé de façon définie dans les trois dimensions par dessus le segment de bord (40).

8. Procédé selon la revendication 7,
**caractérisé en ce que** la bande de bord (20) est rabattue autour du segment de bord (40) par un sur-enroulement exécuté d'environ 180 ° à au moins deux reprises.

9. Procédé selon la revendication 7 ou 8 et une des revendications 2 à 6,
**caractérisé en ce que** la pièce de feuille découpée (4) est immobilisée sur la surface réceptrice (14) du dispositif d'application (6) uniquement dans la région de l'au moins une bande de bord (20), en particulier dans la région d'au moins deux bandes de bord (20) opposées, par aspiration sous vide.

10. Dispositif pour appliquer des pièces de feuille découpées (4) enduites de façon à être autoadhésives sur une face, sur les éléments à encoller (2) pour la mise en oeuvre du procédé selon une des revendications précédentes, composé d'un dispositif d'application (6) possédant une surface réceptrice (14) incurvée avec une forme convexe, destinée à recevoir la pièce de feuille découpée (4) concernée de façon orientée et définie et immobilisée,
**caractérisé en ce que** le dispositif d'application (6) peut être déplacé de façon commandée positivement et défini dans les trois dimensions par rapport à l'élément à encoller (2), de telle manière que la pièce de feuille découpée (4) puisse être appliquée sur l'élément (2) immobilisé par rapport au dispositif d'application (6) dans une disposition définie, par un mouvement purement de pression et de déroulement de la surface réceptrice (14) sur l'élément (2) immobilisé dans une disposition définie par rapport au dispositif d'application (6).

11. Dispositif selon la revendication 10,
**caractérisé en ce que** le dispositif d'application (6) peut être déplacé de façon commandée positivement dans les trois dimensions de manière que le mouvement de déroulement s'effectue à chaque fois autour d'un axe de mouvement de pivotement (15) qui se déplace sur l'élément (2) avec le mouvement de déroulement, axe qui coïncide en permanence avec une zone de contact sensiblement linéaire, qui se forme entre l'élément (2) et la surface réceptrice convexe (14) qui porte la pièce de feuille découpée (4).

12. Dispositif selon la revendication 10 ou 11,
**caractérisé en ce que** le dispositif d'application (6) fait partie d'un bras de robot (8) pour la commande du mouvement duquel il est prévu une unité de commande programmable.

13. Dispositif selon la revendication 10 à 12,
**caractérisé en ce que**, pour l'immobilisation de la pièce de feuille découpée (4), le dispositif d'application (6) présente des moyens d'aspiration sous vide.

14. Dispositif selon la revendication 13,
**caractérisé en ce que**, dans la région de la surface réceptrice (14), le dispositif d'application (6) présente des ouvertures d'aspiration sous vide (16), les ouvertures d'aspiration (16) étant disposées dans la région de bandes de bord (20) de la pièce de feuille découpée (4).

15. Dispositif selon une des revendications 10 à 14,
**caractérisé en ce que** la surface réceptrice (16) du dispositif d'application (6) est formée par une couche (26) susceptible de déformation élastique.

16. Dispositif selon une des revendications 10 à 15,
**caractérisé en ce que** le dispositif d'application (6) présente au moins un rouleau de pression (28) monté mobile en rotation et portant un revêtement, en particulier susceptible de déformation élastique.

17. Dispositif selon une des revendications 10 à 16,
**caractérisé par** des moyens d'orientation pour la pré-orientation, exactement en position, de la pièce de feuille découpée (4) sur la surface réceptrice (14).
